(19) Europäisches Patentamt / European Patent Office / Office européen des brevets

(11) **EP 2 658 076 B1**

(12) **EUROPEAN PATENT SPECIFICATION**

(45) Date of publication and mention
of the grant of the patent:
**11.11.2020 Bulletin 2020/46**

(21) Application number: **11851038.7**

(22) Date of filing: **28.11.2011**

(51) Int Cl.:
*H02J 7/00* (2006.01)          *H01M 2/10* (2006.01)
*H01M 10/44* (2006.01)          *H01M 10/48* (2006.01)

(86) International application number:
**PCT/JP2011/077353**

(87) International publication number:
**WO 2012/086369 (28.06.2012 Gazette 2012/26)**

(54) **DISCHARGE CONTROLLER**

ENTLADESTEUERUNGSVORRICHTUNG

CONTRÔLEUR DE DÉCHARGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2010 JP 2010287837**

(43) Date of publication of application:
**30.10.2013 Bulletin 2013/44**

(73) Proprietor: **Envision AESC Energy Devices Ltd.
Sagamihara-shi, Kanagawa 252-0254 (JP)**

(72) Inventors:
• **SUZUKI, Shin
Sagamihara-shi
Kanagawa 252-5298 (JP)**
• **TASHIRO, Yoichiro
Tokyo 100-8560 (JP)**

(74) Representative: **Vossius & Partner
Patentanwälte Rechtsanwälte mbB
Siebertstrasse 3
81675 München (DE)**

(56) References cited:
**JP-A- 11 273 747      JP-A- 62 181 632
JP-A- 2008 226 511      JP-A- 2008 226 511**

**Description**

The present invention relates to a discharge controller, a discharge control method and a program for controlling discharge of cells.

In recent years, in various fields, there have been growing concerns about environmental problems.

With these concerns, in the field of electric power supply therein, certain approaches to power supply such as photovoltaic (PV) power generation and use of secondary cells used in electric vehicles (EVs) and hybrid EVs (HEVs) have attracted attention. Lithium-ion secondary cells are considered promising in such secondary cells. It is expected that lead storage cells will be replaced with Lithium-ion secondary cells in response to widespread use thereof in the future.

As a rule, connecting an old cell (having a small discharge capacity) and a new cell (having a large discharge capacity) in parallel with each other should be avoided. This is for the purpose of avoiding a cross current caused by a difference between the voltages of the cells. A large cross current can cause excess current or abnormal heat generation. The same can also be said with respect to the above-described secondary cells.

A system has therefore been devised in which respective switches for making connection/disconnection are provided for a plurality of cells connected in parallel with each other, and a switch that is provided only for the cell that has a higher voltage than that of the other cells is connected (maintained in the on state) at the time of discharge until the differences between the voltages of the cells become equal to or smaller than a predetermined value (see, for example, Patent Literature 1 (JP 2009-033936 A)).

JP 2008-226511 A discloses a discharge controller for storage batteries connected in parallel with each other and which comprises a remaining capacity calculator and a control section.

In recent years, a "degradation region" in which degradation of a cell is promoted in an intermediate region of a lithium-ion cell such as described above (the region from the upper limit to the lower limit of the discharge capacity in which the cell can supply power) has been discovered. Such a degradation region is noticeably recognized in lithium-ion cells having manganese-based positive electrodes in particular. Degradation of a cell is promoted by passage through the degradation region if a substantial length of time is taken to pass through the degradation region while the discharge capacity remaining in the cell is being reduced by discharge of the cell. It is, therefore, best to prohibit passage through this region to ensure long life for the cell. In a case where passage through the degradation region is required, however, there is a need to complete passage through the degradation region as fast as possible. There is the risk that degradation of a plurality of cells connected in parallel with each other will be particularly pronounced due to the low rate of reduction in discharge capacity for each cell.

Even when the technique described in Patent Literature 1 is used, an extension of the life of the cell cannot be achieved since discharge considering this degradation region cannot be performed.

An object of the present invention is to provide a discharge controller, a discharge control method and a program as a solution to the above-described problem. This object is achieved with the features of the claims.

A discharge controller as described for controlling discharge of a plurality of cells connected in parallel with each other includes:

    a remaining capacity calculation section that calculates remaining capacities for each of the plurality of cells; and
    a control section that, after starting discharge of the plurality of cells, stops discharge of one of the cells whose remaining capacity calculated by the remaining capacity calculation section has become equal to a threshold value set in advance.

A discharge control method as described for controlling discharge of a plurality of cells connected in parallel with each other includes the steps of:

    discharging the plurality of cells;
    calculating remaining capacities for each of the plurality of cells; and
    stopping, after starting discharge of the plurality of cells, discharge of one of the plurality of cells whose remaining capacity calculated has become equal to a threshold value set in advance.

A program as described for making a controller that controls discharge of a plurality of cells connected in parallel with each other execute a process consists of the steps of:

    discharging the plurality of cells;
    calculating remaining capacities for each of the plurality of cells; and
    stopping, after starting discharge of the plurality of cells, discharge of one of the plurality of cells whose remaining capacity calculated has become equal to a threshold value set in advance.

As described above, according to the present invention, extension of the life of cells can be achieved.

Brief Description of Drawings

Figure 1 is a diagram showing an exemplary embodiment of a discharge controller of the present invention.
Figure 2 is a diagram showing an example of an internal configuration of a remaining capacity calculation section shown in Figure 1.
Figure 3 is a diagram showing an example of a full-charge capacity stored in a full-charge capacity hold section shown in Figure 2.
Figure 4 is a diagram showing an example of threshold values stored in a storage section shown in Figure 1.
Figure 5 is a flowchart for explaining a method of discharge control in the exemplary embodiment shown in Figure 1.
Figure 6 is a diagram showing another exemplary embodiment of the discharge controller of the present invention.
Figure 7 is a diagram showing an example of an internal configuration of a remaining capacity calculation section shown in Figure 6.
Figure 8 is a diagram showing an example of changes with respect to time in the value of voltage across a cell shown in Figure 6 measured by a voltmeter when the cell is discharged.
Figure 9 is a diagram showing an example of threshold values stored in a storage section shown in Figure 6.
Figure 10 is a flowchart for explaining a method of discharge control in the exemplary embodiment shown in Figure 6.
Figure 11 is a graph showing change in remaining capacity of an ordinary cell with respect to time as the cell is discharged.
Figure 12 is a graph showing an example of change in remaining capacity of a cell with respect to time as the cell is discharged according to the present invention.
Figure 13 is a diagram showing still another exemplary embodiment of the discharge controller of the present invention.
[Figure Figure 14 is a diagram showing an example of threshold values stored in a storage section shown in Figure 13.
Figure 15 is a flowchart for explaining a method of discharge control in the exemplary embodiment shown in Figure 13.

Description of Embodiments

Exemplary embodiments will be described below with reference to the drawings.

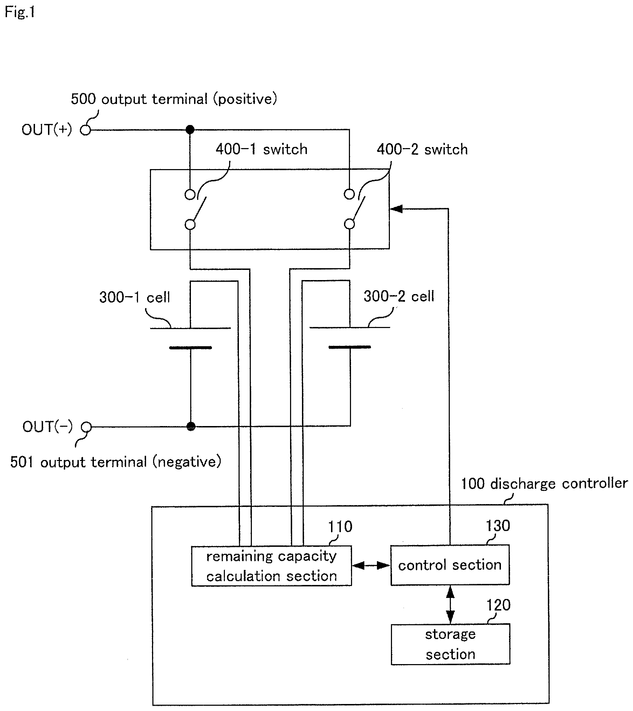

Figure 1 is a diagram showing an exemplary embodiment of a discharge controller of the present invention.
As shown in Figure 1, the present exemplary embodiment includes discharge controller 100, cells 300-1 and 300-2, switches 400-1 and 400-2, output terminal (positive) 500 and output terminal (negative) 501.
Cells 300-1 and 300-2 are lithium-ion cells connected in parallel with each other. Negative electrode sides of cells 300-1 and 300-2 are connected to output terminal (negative) 501. Positive electrode sides of cells 300-1 and 300-2 are connected to switches 400-1 and 400-2, respectively, via discharge controller 100. The number of cells connected in parallel with each other is not limited to two.
Switches 400-1 and 400-2 are switches to be closed/opened to establish or break connections between cells 300-1 and 300-2 and output terminal (positive) 500 through which cells 300-1 and 300-2 are externally discharged. This closing/opening is controlled by discharge controller 100. The number of switches is the same as the number of cells.
Discharge controller 100 controls discharge of cells 300-1 and 300-2 by controlling closing/opening of switches 400-1 and 400-2 based on remaining capacities of cells 300-1 and 300-2.
In discharge controller 100, remaining capacity calculation section 110, storage section 120 and control section 130 are provided, as shown in Figure 1.
Remaining capacity calculation section 110 calculates remaining capacities of cells 300-1 and 300-2. Remaining capacity calculation section 110 calculates, as remaining capacities, values which are the results of subtraction of values obtained by measuring currents flowing from cells 300-1 and 300-2 and the time from a start of discharge of cells 300-1 and 300-2 and by multiplying the measured currents and time from the full-charge capacities of cells 300-1 and 300-2.

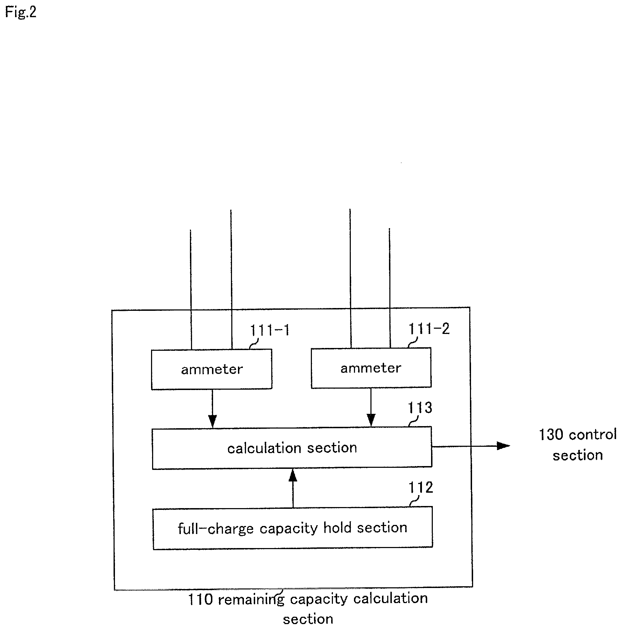

Figure 2 is a diagram showing an example of an internal configuration of remaining capacity calculation section 110 shown in Figure 1.
In remaining capacity calculation section 110 shown in Figure 1, ammeters 111-1 and 111-2, full-charge capacity hold section 112 and calculation section 113 are provided, as shown in Figure 2.
Ammeter 111-1 measures a current flowing from cell 300-1. Ammeter 111-1 outputs the measured current value of cell 300-1 to calculation section 113.
Ammeter 111-2 measures a current flowing from cell 300-2. Ammeter 111-2 outputs the measured current value of cell 300-2 to calculation section 113.

Full-charge capacity hold section 112 stores in advance the capacities of cells 300-1 and 300-2 when the capacities are fully charged.

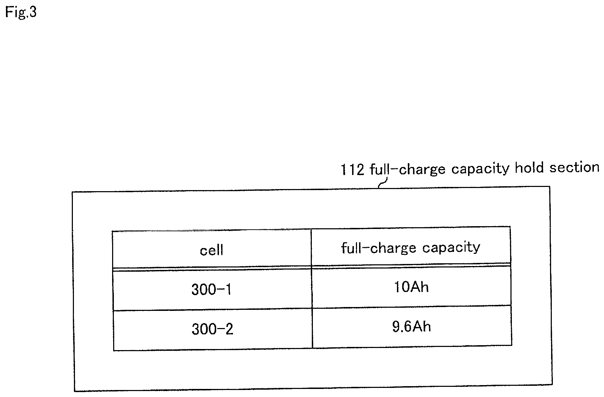

Figure 3 is a diagram showing an example of the full-charge capacity stored in full-charge capacity hold section 112 shown in Figure 2.

In the full-charge capacity hold section 112 shown in Figure 2, the capacities of cells 300-1 and 300-2 when the cells are fully charged are stored as full-charge capacities, as shown in Figure 3. This information is written in advance.

For example, as shown in Figure 3, cell 300-1 and a full-charge capacity 10 Ah are stored while being associated with each other. This indicates that the capacity of cell 300-1, when the cell is fully charged, is 10 Ah.

Also, as shown in Figure 3, cell 300-2 and a full-charge capacity 9.6 Ah are stored while being associated with each other. This indicates that the capacity of cell 300-2 when the cell is fully charged is 9.6 Ah.

Calculation section 113 calculates remaining capacities of cells 300-1 and 300-2 based on the current values output from ammeters 111-1 and 111-2 and the full-charge capacities stored in full-charge capacity hold section 112.

A concrete calculation method will be described below.

With respect to a remaining capacity of cell 300-1, calculation section 113 multiplies the current value output from ammeter 111-1 and the time from a start of discharge (measured with a timer (not illustrated)) together and subtracts the product of multiplication from the full-charge capacity associated with cell 300-1 in full-charge capacity hold section 112 (10 Ah in the example shown in Figure 3). The value thereby obtained is the remaining capacity of cell 300-1.

With respect to the remaining capacity of cell 300-2, calculation section 113 multiplies the current value output from ammeter 111-2 and the time from the start of discharge (measured with the timer) together and subtracts the product of multiplication from the full-charge capacity associated with cell 300-2 in full-charge capacity hold section 112 (9.6 Ah in the example shown in Figure 3). The value thereby obtained is the remaining capacity of cell 300-2.

Calculation section 113 outputs the calculated remaining capacities of cells 300-1 and 300-2 to control section 130.

Storage section 120 stores a first threshold value and a second threshold value in advance.

The first threshold value is the value at the upper side (upper limit) of the above-described "degradation region". The second threshold value is the value at the lower side (lower limit) of the above-described "degradation region".

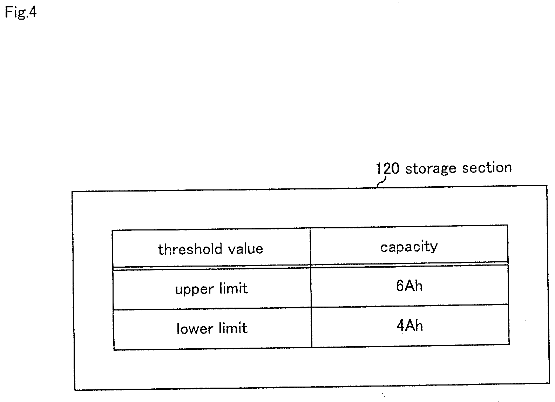

Figure 4 is a diagram showing an example of threshold values stored in storage section 120 shown in Figure 1.

In storage section 120 shown in Figure 1, the upper limit and the lower limit of the degradation region are stored as threshold values, as shown in Figure 4.

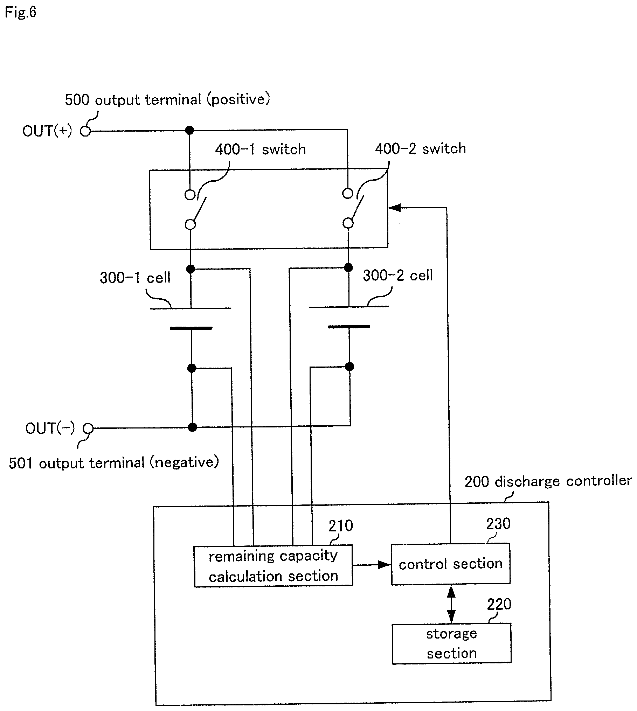

For example, as shown in Figure 4, 6 Ah is stored as a threshold value corresponding to the upper limit of the degradation region (first threshold value). Also, 4 Ah is stored as a threshold value corresponding to the lower limit of the degradation region (second threshold value). This indicates that the range of remaining capacity of the cell from 6 Ah to 4 Ah is the degradation region.

Control section 130 reads out the upper and lower limits of the degradation region stored in storage section 120, and compares the read upper and lower limits of the degradation region with the remaining capacities of cells 300-1 and 300-2 output from calculation section 113. If the remaining capacity of one of cells 300-1 and 300-2 is equal to the upper limit of the degradation region, control section 130 discharges only this cell until the remaining capacity of this cell becomes equal to the lower limit of the degradation region. At this time, priority may be giving discharging this cell. That is, in a case where three cells are connected in parallel with each other, the two-cell operation (discharge) of one of the cells whose remaining capacity is in the degradation region and one of the other two cells, two of these cells in all, may be performed.

For example, if the remaining capacity of cell 300-1 becomes equal to the upper limit of the degradation region, control section 130 maintains switch 400-1 in the closed state and maintains switch 400-2 in the open state until the remaining capacity of cell 300-1 becomes equal to the lower limit of the degradation region.

If the remaining capacity of cell 300-2 becomes equal to the upper limit of the degradation region, control section 130 maintains switch 400-2 in the closed state and maintains switch 400-1 in the open state until the remaining capacity of cell 300-2 becomes equal to the lower limit of the degradation region.

When the remaining capacity of cell 300-1 and the remaining capacity of cell 300-2 is out of the range from the upper limit to the lower limit of the degradation region, that is, when each remaining capacity is not in the degradation region, control section 130 may operate cells 300-1 and 300-2 in an ordinary two-cell parallel operation manner or may perform rotation discharge (discharge performed by control section 130 alternately repeating opening and closing of switches 400-1 and 400-2).

Thus, control section 130 controls discharge and non-discharge of cells 300-1 and 300-2 by opening and closing switches 400-1 and 400-2.

A method of discharge control in the exemplary embodiment shown in Figure 1 will be described below.

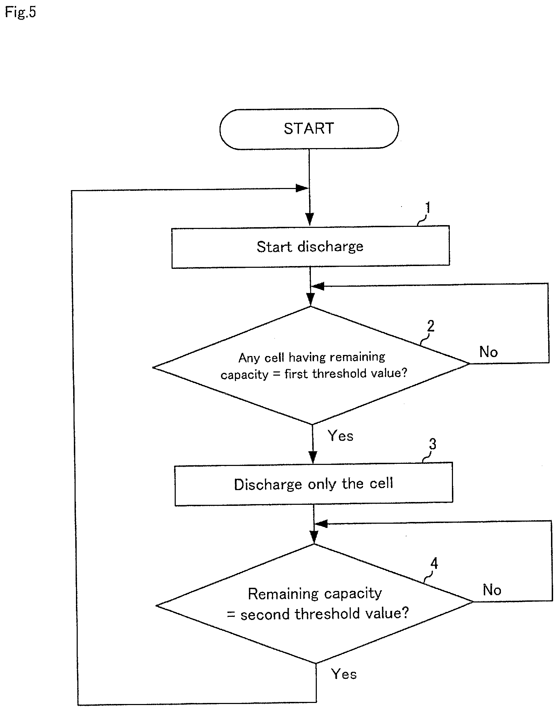

Figure 5 is a flowchart showing a method of discharge control in the exemplary embodiment shown in Figure 1.

First, in step 1, the two-cell operation (discharge) of cells 300-1 and 300-2 is started. When discharge is started, the above-described timer starts operating.

When discharge is started, measurement of the currents flowing from cells 300-1 and 300-2 by ammeters 111-1 and 111-2 is started.

Thereafter, in step 2, control section 130 determines whether or not the remaining capacity of one of the cells is equal to the upper limit of the degradation region stored in storage section 120.

This determination is realized by calculation in calculation section 113 multiplying together the current values measured and output by ammeters 111-1 and 111-2 and the time measured with the timer and subtracting the products of multiplication from the full-charge capacities of cells 300-1 and 300-2 stored in full-charge capacity hold section 112, and by comparing the results of subtraction with the upper limit of the degradation region stored as the first threshold value in storage section 120.

Description will be made concretely by way of example with respect to a case where, for example, the full-charge capacities of cells 300-1 and 300-2 stored in full-charge capacity hold section 112 have the values shown in Figure 3 (10 Ah and 9.6 Ah); the upper limit of the degradation region (first threshold value) stored in storage section 120 is the value shown in Figure 4, i.e., 6 Ah; and the lower limit of the degradation region (second threshold value) is the value shown in Figure 4, i.e., 4 Ah.

In a case where when the timer measures two hours, the current value measured and output by ammeter 111-1 is 1.6 A and the current value measured and output by ammeter 111-2 is 1.8 A, calculations described below are performed.

A calculation by (Equation 1) is made with respect to cell 300-1.

$$10 \text{ Ah (full-charge capacity)} - 1.6 \text{ A (current value)} \times 2h \text{ (hours)} = 6.8 \text{ Ah (remaining capacity)} \qquad \text{(Equation 1)}$$

A calculation by (Equation 2) is made with respect to cell 300-2.

$$9.6 \text{ Ah (full-charge capacity)} - 1.8 \text{ A (current value)} \times 2h \text{ (hours)} = 6 \text{ Ah (remaining capacity)} \qquad \text{(Equation 2)}$$

The remaining capacities calculated with respect to cells 300-1 and 300-2 are compared with the upper limit of the degradation region stored in storage section 120.

The remaining capacity of cell 300-1 is 6.8 Ah from (Equation 1) and the upper limit of the degradation region stored in storage section 120 is 6 Ah, so that the remaining capacity of cell 300-1 and the upper limit of the degradation region are not equal to each other.

On the other hand, the remaining capacity of cell 300-2 is 6 Ah from (Equation 2) and the upper limit of the degradation region stored in storage section 120 is 6 Ah, so that the remaining capacity of cell 300-2 and the upper limit of the degradation region are equal to each other.

As a result, the cell whose remaining capacity is equal to the upper limit of the degradation region is cell 300-2.

If control section 130 does not determine in step 2 that the remaining capacity of one of the cells is equal to the upper limit of the degradation region, discharge of cells 300-1 and 300-2 is further continued.

On the other hand, if control section 130 determines in step 2 that the remaining capacity of one of the cells is equal to the upper limit of the degradation region, discharge of only the cell whose remaining capacity is equal to the upper limit of the degradation region is performed in step 3. Control section 130 performs this discharge control by using closing/opening of switches 400-1 and 400-2, as described above.

In the above-described example (the case where cell 300-2 is the cell whose remaining capacity became equal to the upper limit of the degradation region), control section 130 sets switch 400-1 in the open state. Cell 300-1 that is connected to switch 400-1 is not discharged thereafter. On the other hand, control section 130 sets switch 400-2 in the closed (connected) state. Discharge of cell 300-2 that is connected to switch 400-2 is performed thereby.

Thereafter, control section 130 determines in step 4 whether or not the remaining capacity of the cell presently discharged is equal to the lower limit of the degradation region stored in storage section 120.

In the above-described example (discharge of only cell 300-2 is performed), the remaining capacity of cell 300-2 is calculated by remaining capacity calculation section 110, and the calculated remaining capacity and the lower limit of the degradation region stored in storage section 120 (4 Ah in the example shown in Figure 4) are compared. This remaining capacity calculation method uses the equation shown above.

If control section 130 does not determine in step 4 that the remaining capacity of the cell presently discharged is equal to the lower limit of the degradation region, that is, control section 130 determines that the remaining capacity of the cell presently discharged is not equal to the lower limit of the degradation region, discharge of this cell is further continued. In the above-described example, since discharge of only cell 300-2 is performed, discharge of only cell 300-2 is continued if control section 130 determines that the remaining capacity of cell 300-2 is not equal to the lower limit of the degradation region.

On the other hand, if control section 130 determines in step 4 that the remaining capacity of the cell presently discharged is equal to the lower limit of the degradation region, processing in step 1 is performed. In the above-described example, since discharge of only cell 300-2 is performed, the two-cell operation (discharge) of cells 300-1 and 300-2 is performed (restarted) if control section 130 determines that the remaining capacity of cell 300-2 is equal to the lower limit of the degradation region.

Thereafter, the remaining capacity of cell 300-1 also becomes equal to the upper limit of the degradation region stored in storage section 120. In that case, the same processing is also performed for discharge of only cell 300-1.

A case where (full-charge capacity) - (current value) $\times$ (discharge time), as described by using (Equation 1) and (Equation 2), is used as the remaining capacity of each cell has been described. However, the value of voltage across each cell may alternatively be used.

Figure 6 is a diagram showing another exemplary embodiment of the discharge controller of the present invention.

As shown in Figure 6, the present exemplary embodiment includes discharge controller 200, cells 300-1 and 300-2, switches 400-1 and 400-2, output terminal (positive) 500 and output terminal (negative) 501.

Cells 300-1 and 300-2, switches 400-1 and 400-2, output terminal (positive) 500 and output terminal (negative) 501 are the same as those used in the exemplary embodiment shown in Figure 1. In the present exemplary embodiment, the positive electrode side of cell 300-1 and switch 400-1 are directly connected to each other. Also, the positive electrode side of cell 300-2 and switch 400-2 are directly connected to each other.

Discharge controller 200 controls discharge of cells 300-1 and 300-2 by controlling closing/opening of switches 400-1 and 400-2 based on remaining capacities of cells 300-1 and 300-2.

In discharge controller 200, remaining capacity calculation section 210, storage section 220 and control section 230 are provided, as shown in Figure 6.

Remaining capacity calculation section 210 calculates remaining capacities of cells 300-1 and 300-2. Remaining capacity calculation section 210 calculates as remaining capacities the values of voltages across cells 300-1 and 300-2. Strictly speaking, in the case of using the voltage value as a remaining capacity as described above, the present resistance value is calculated from the present current and voltage values, and a voltage value estimated based on them by an open voltage method is calculated as the remaining capacity.

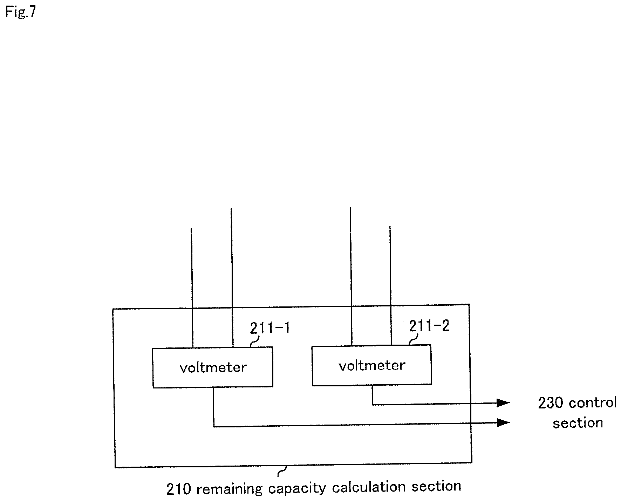

Figure 7 is a diagram showing an example of an internal configuration of remaining capacity calculation section 210 shown in Figure 6.

In remaining capacity calculation section 210 shown in Figure 6, voltmeters 211-1 and 211-2 are provided, as shown in Figure 7.

Voltmeter 211-1 measures the voltage across cell 300-1. Voltmeter 211-1 outputs the measured value of voltage across cell 300-1 to control section 230.

Voltmeter 211-2 measures the voltage across cell 300-2. Voltmeter 211-2 outputs the measured value of voltage across cell 300-2 to control section 230.

A method of calculating, when cells 300-1 and 300-2 shown in Figure 6 are discharged, remaining cell capacities, with respect to time, based upon changes in the values of voltages across cells 300-1 and 300-2 respectively measured by voltmeters 211-1 and 211-2 will be described below. A method of calculating a remaining capacity, with respect to time, based upon a change with respect to time in the value of voltage across cell 300-1 measured by voltmeter 211-1 when cell 300-1 is discharged will be described hereinbelow by way of example. A method of calculating a remaining capacity, with respect to time, based upon a change with respect to time in the value of voltage across cell 300-2 measured by voltmeter 211-2 when cell 300-2 is discharged is the same as the method of calculation with respect to cell 300-1.

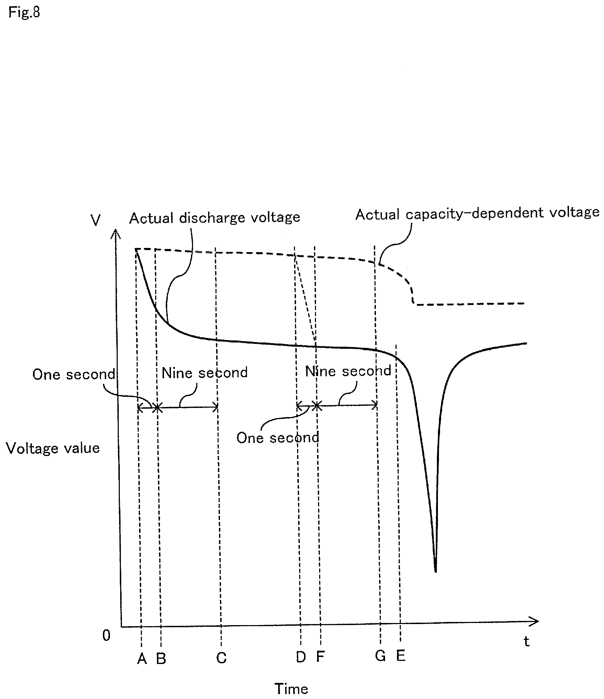

Figure 8 is a diagram showing an example of changes with respect to time in the value of voltage across cell 300-1 measured by voltmeter 211-1 when cell 300-1 shown in Figure 6 is discharged.

As shown in Figure 8, the value of voltage across cell 300-1 measured by voltmeter 211-1 ("actual discharge voltage" indicated by the solid line in Figure 8) is lower than the actual capacity-dependent voltage indicated by the broken line because an external impedance, which is an external cause that is separate from the internal impedance of cell 300-1, is added as a causal resistance value (impedance) to the internal impedance of cell 300-1.

Therefore, the voltage value is estimated (corrected) by using the above-mentioned open voltage method.

"A" shown in Figure 8 denotes a time at which discharge starts (point A), and "E" shown in Figure 8 denotes a time at which discharge ends (point E). Point B is a point one second after point A, and point C is a point nine seconds after point B.

A one-second average impedance between point A and point B is first calculated. Since the time period from point A to point B is one second, the impedance calculated at one point (point A) is the one-second average impedance between point A and point B. The calculated impedance is expressed as a Ω. This impedance a Ω is the sum of the internal impedance of the above-described cell 300-1 and the other external impedance.

A one-second average impedance between point B and point C is thereafter calculated. Since the time period from point B to point C is nine seconds, impedance calculation is performed nine times at intervals of one second to obtain a one-second average value. The calculated impedance is expressed as b Ω. This b Ω is the internal impedance of the above-described cell 300-1.

Therefore, c Ω, which is the external impedance, can be calculated by subtracting b Ω from a Ω (a - b = c).

Thereafter, as discharge end point E is being reached, a one-second average impedance for one second (between point D and point F) and a one-second average impedance for nine seconds (between point F and point G) are also calculated.

At point E, impedance is calculated from the value of voltage across cell 300-1 measured by voltmeter 211-1. The voltage at point F can be obtained by adding the voltage drop that corresponds to b Ω from the calculated impedance at point E.

Subsequently, the actual capacity-dependent voltage (remaining capacity) can be calculated by adding the external impedance c Ω to the average of the one-second average impedance between point D and point F (1D Ω) and the one-second average impedance between point F and point G (9D Ω), and by multiplying the value obtained by this addition by the current value (I). That is, if the remaining capacity is CAPV,

$$CAPV = ((1D + 9D)/2 + c) \times I$$

If the value of the external impedance c Ω is set in advance, it may be used. Remaining capacity calculation section 210 may calculate remaining capacities of cells 300-1 and 300-2 in this way.

Storage section 220 stores a first threshold value and a second threshold value in advance.

The first threshold value is the value at the upper side (upper limit) of the above-described "degradation region". The second threshold value is the value at the lower side (lower limit) of "the degradation region".

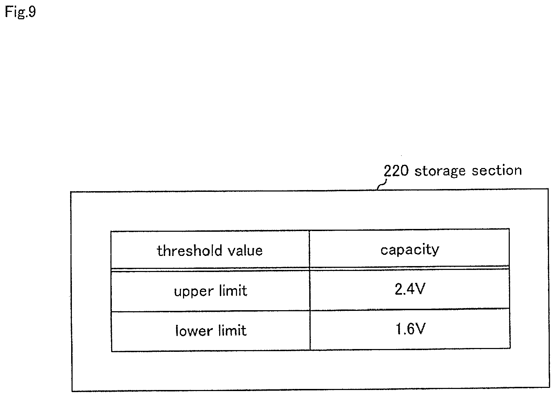

Figure 9 is a diagram showing an example of the threshold values stored in storage section 220 shown in Figure 6.

As shown in Figure 9, the upper limit and the lower limit are stored as threshold values in storage section 220 shown in Figure 6.

For example, as shown in Figure 9, 2.4 V is stored as a threshold value corresponding to the upper limit of the degradation region (first threshold value). Also, 1.6 V is stored as a threshold value corresponding to the lower limit of the degradation region (second threshold value). This indicates that the range of voltage value of the cell from 2.4 V to 1.6 V that corresponds to remaining capacities of the cell is the degradation region.

Control section 230 reads out the upper and lower limits of the degradation region stored in storage section 220, and compares the read upper and lower limits of the degradation region with the voltage values output from voltmeters 211-1 and 211-2 as remaining capacities of cells 300-1 and 300-2. If the voltage value of one of cells 300-1 and 300-2 is equal to the upper limit of the degradation region, control section 230 discharges only this cell until the voltage value of this cell becomes equal to the lower limit of the degradation region.

For example, if the voltage value of cell 300-1 becomes equal to the upper limit of the degradation region, control section 230 maintains switch 400-1 in the closed state and maintains switch 400-2 in the open state until the voltage value of cell 300-1 becomes equal to the lower limit of the degradation region.

If the voltage value of cell 300-2 becomes equal to the upper limit of the degradation region, control section 230 maintains switch 400-2 in the closed state and maintains switch 400-1 in the open state until the voltage value of cell 300-2 becomes equal to the lower limit of the degradation region.

When the voltage value of cell 300-1 and the voltage value of cell 300-2 are out of the range from the upper limit to the lower limit of the degradation region, that is, each voltage value is not in the degradation region, control section 230 may operate cells 300-1 and 300-2 in an ordinary two-cell parallel operation manner or may perform rotation discharge of cells 300-1 and 300-2.

Specifically, in such a case, control section 230 may repeat alternately opening and closing switches 400-1 and 400-2.

Thus, control section 230 controls discharge and non-discharge of cells 300-1 and 300-2 by opening and closing switches 400-1 and 400-2.

A method of discharge control in the exemplary embodiment shown in Figure 6 will be described below.

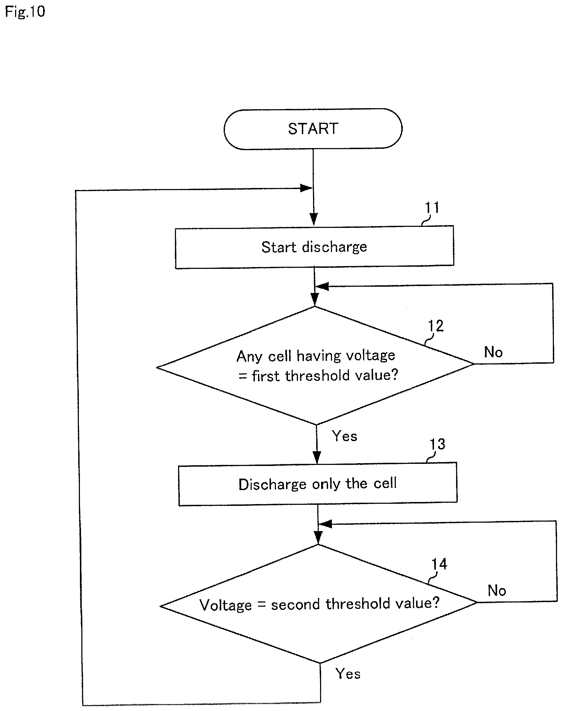

Figure 10 is a flowchart showing a method of discharge control in the exemplary embodiment shown in Figure 6.

First, in step 11, the two-cell operation (discharge) of cells 300-1 and 300-2 is started.

When discharge is started, measurement of the values of voltages across cells 300-1 and 300-2 by voltmeters 211-1 and 211-2 is started.

Thereafter, in step 12, control section 230 determines whether or not the voltage value of one of the cells measured by voltmeter 211-1 or 211-2 is equal to the upper limit of the degradation region stored in storage section 220.

This determination is made based on the result comparing the voltage value measured by voltmeter 211-1 or 211-2 with the value equal to the upper limit of the degradation region stored in storage section 220.

For example, in a case where threshold values that corresponds to the upper limit (2.4 V) and the lower limit (1.6 V) of the degradation region as shown in Figure 9 are stored in storage section 220, if the voltage value measured by voltmeter 211-1 is 2.4 V, and if the voltage value measured by voltmeter 211-2 is 2.5 V, control section 230 determines that the voltage value of cell 300-1 measured by voltmeter 211-1 is equal to the upper limit of the degradation region.

If control section 230 does not determine in step 12 that the voltage value of one of the cells is equal to the upper limit of the degradation region, discharge of cells 300-1 and 300-2 is further continued.

On the other hand, if control section 230 determines in step 12 that the voltage value of one of the cells is equal to the upper limit of the degradation region, discharge of only the cell whose voltage value is equal to the upper limit of the degradation region is performed in step 13. Control section 230 performs this discharge control by using closing/opening of switches 400-1 and 400-2, as described above.

In the above-described example (the case where cell 300-1 is the cell whose voltage value became equal to the upper limit of the degradation region), control section 230 sets switch 400-2 in the open state. Cell 300-2 that is connected to switch 400-2 is not discharged thereafter. On the other hand, control section 230 sets switch 400-1 in the closed (connected) state. Discharge of cell 300-1 that is connected to switch 400-1 is performed thereby.

Thereafter, control section 230 determines in step 14 whether or not the voltage value of the cell presently discharged is equal to the lower limit of the degradation region stored in the storage section 220.

In the above-described example (discharge of only cell 300-1 is performed), the voltage value of cell 300-1 measured by voltmeter 211-1 and the lower limit of the degradation region stored in storage section 220 (1.6 V in the example shown in Figure 9) are compared.

If control section 230 does not determine in step 14 that the voltage value of the cell presently discharged is equal to the lower limit of the degradation region, that is, control section 230 determines that the voltage value of the cell presently discharged is not equal to the lower limit of the degradation region, discharge of this cell is further continued. Since discharge of only cell 300-1 is performed in the above-described example, discharge of only cell 300-1 is continued if control section 230 determines that the voltage value of cell 300-1 that is measured by voltmeter 211-1 is not equal to the lower limit of the degradation region.

If control section 230 determines in step 14 that the voltage value of the cell presently discharged is equal to the lower limit of the degradation region, processing in step 11 is performed. Since discharge of only cell 300-1 is performed in the above-described example, the two-cell operation (discharge) of cells 300-1 and 300-2 is performed (restarted) if control section 230 determines that the voltage value of cell 300-1 that is measured by voltmeter 211-1 is equal to the lower limit of the degradation region.

Thereafter, the voltage value of cell 300-2 measured by voltmeter 211-2 also becomes equal to the upper limit of the degradation region stored in storage section 220. In that case, the same processing is also performed for discharge of only cell 300-2.

As described above, only the cell whose remaining capacity has entered the degradation region during discharge of the plurality of cells that are connected in parallel with each other is discharged, thus enabling fast passage through the degradation region. This effect will be described below with reference to the drawings. A case where two cells are connected in parallel with each other will be described below by way of example.

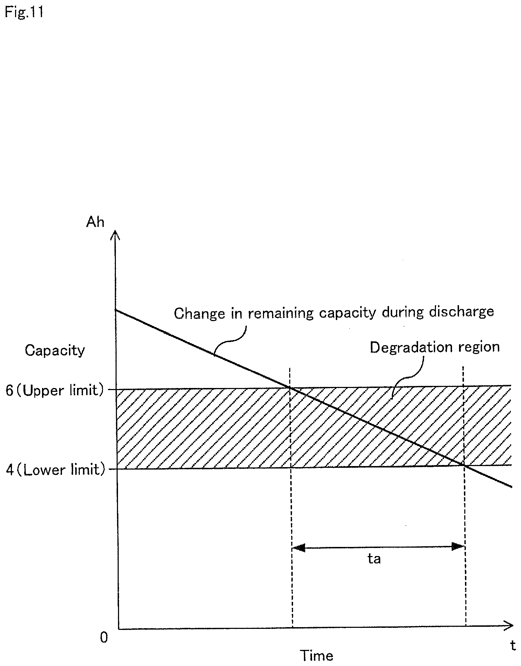

Figure 11 is a graph showing change in remaining capacity of an ordinary cell with respect to time as the cell is discharged.

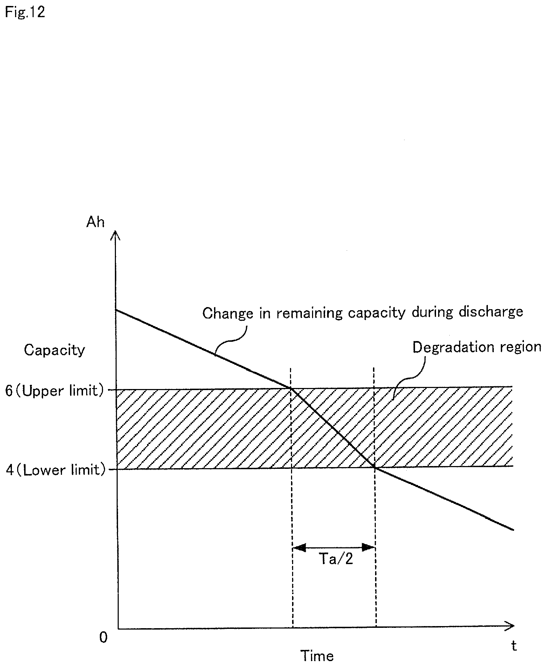

Figure 12 is a graph showing an example of change in remaining capacity of a cell with respect to time as the cell is discharged according to the present invention.

In ordinary cases, as shown in Figure 11, the remaining capacity of a cell decreases at a generally constant rate with respect to discharge time. The time period taken for passage through the degradation region from a capacity of 6 Ah to a capacity of 4 Ah is assumed to be Ta.

On the other hand, as shown in Figure 12, since discharge of only one cell is performed from the remaining capacity 6A that corresponds to the upper limit of the degradation region to 4 Ah, the rate of reduction in remaining capacity of the cell with respect to time in the degradation region is increased. That is, the time taken for passage through the degradation region in discharge of the cell is reduced. As shown in Figure 12, in the case described here by way of example, where two cells are connected in parallel with each other, the time taken for passage through the degradation region is reduced to Ta/2, i.e., to half of the time in the case shown in Figure 11.

Needless to say, the degradation region passage time is reduced to 1/3 in a case where three cells are connected in parallel with each other, and the degradation region passage time is reduced to 1/4 in a case where four cells are connected in parallel with each other.

The above-described method of calculating the remaining capacity of the cell is not exclusively used.

Thus, when a cell has a remaining capacity in a degradation region by discharge, the time taken for passage through the degradation region can be reduced by discharging only this cell. As a result, an extension of the life of the cell can be achieved. This effect is particularly high when discharge control is performed on lithium-ion cells that have manganese-based positive poles in which a degradation region is noticeably recognized.

While a process in which when a cell has a remaining capacity in a degradation region by discharge, only this cell is discharged has been described, a process may alternatively be performed in which discharge of one of cells having a remaining capacity immediately before its reaching the degradation region is stopped while discharge of the other cells is performed.

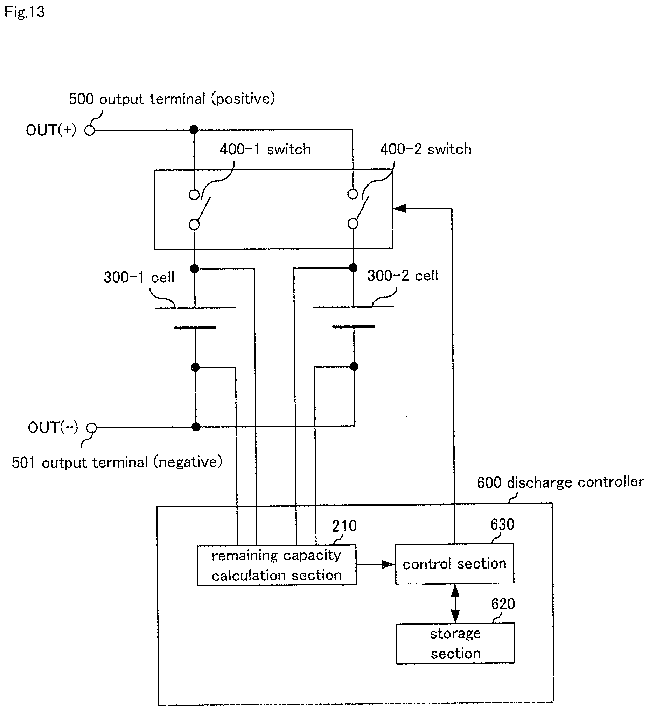

Figure 13 is a diagram showing another exemplary embodiment of the discharge controller of the present invention.

As shown in Figure 13, the present exemplary embodiment includes discharge controller 600, cells 300-1 and 300-2, switches 400-1 and 400-2, output terminal (positive) 500 and output terminal (negative) 501.

Cells 300-1 and 300-2, switches 400-1 and 400-2, output terminal (positive) 500 and output terminal (negative) 501 are the same as those used in the exemplary embodiment shown in Figure 6. In the present exemplary embodiment, the positive electrode side of cell 300-1 and switch 400-1 are directly connected to each other as in the exemplary embodiment shown in Figure 6. Also, the positive electrode side of cell 300-2 and switch 400-2 are directly connected to each other.

Discharge controller 600 controls discharge of cells 300-1 and 300-2 by controlling closing/opening of switches 400-1 and 400-2 based on remaining capacities of cells 300-1 and 300-2.

In discharge controller 600, remaining capacity calculation section 210, storage section 620 and control section 630 are provided, as shown in Figure 13.

Remaining capacity calculation section 210 is the same as that shown in Figure 6 (the internal configuration is the same as that shown in Figure 7).

Storage section 620 stores a threshold value in advance.

The threshold value stored in storage section 620 is a value larger by a predetermined value than the value at the upper side (upper limit) of the above-described "degradation region". That is, this threshold value is stored as a value on the verge of the "degradation region".

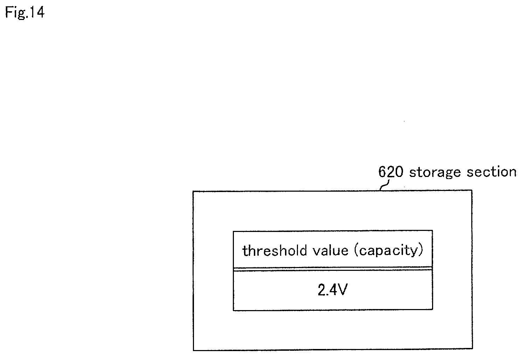

Figure 14 is a diagram showing an example of the threshold value stored in storage section 620 shown in Figure 13.

As shown in Figure 14, a threshold value is stored in storage section 620 shown in Figure 13.

For example, 2.4 V is stored as the threshold value (capacity), as shown in Figure 14. This indicates that when the voltage value of the cell, or a remaining capacity of the cell, reaches 2.4 V, it also reaches a value on the border of the degradation region.

Control section 630 reads out the threshold value stored in storage section 620 after starting discharge of cells 300-1 and 300-2, and compares the read threshold value and the voltage values output from voltmeters 211-1 and 211-2 as remaining capacities of cells 300-1 and 300-2. Control section 630 stops discharge of the first cell from cells 300-1 and 300-2 whose voltage value becomes equal to the threshold value. At this time, control section 630 continues discharge of the other cell - cell 300-1 or cell 300-2 - whose voltage value has not become equal to the threshold value.

For example, when the voltage value of cell 300-1 becomes equal to the threshold value after control section 630 has started discharge by closing switches 400-1 and 400-2, control section 630 sets switch 400-1 in the open state while maintaining switch 400-2 in the closed state.

When the voltage value of cell 300-2 thereafter becomes equal to the threshold value, control section 630 sets switch 400-2 in the open state while maintaining switch 400-1 in the open state.

Control section 630 may operate cells 300-1 and 300-2 in an ordinary two-cell parallel operation manner or may perform rotation discharge of cells 300-1 and 300-2 when the voltage value of cell 300-1 and the voltage value of cell 300-2 are each not equal to the threshold value. Specifically, in such a case, control section 630 may alternately perform opening and closing of switches 400-1 and 400-2.

Thus, control section 630 controls discharge and non-discharge of cells 300-1 and 300-2 by opening and closing switches 400-1 and 400-2.

A method of discharge control in the exemplary embodiment shown in Figure 13 will be described below.

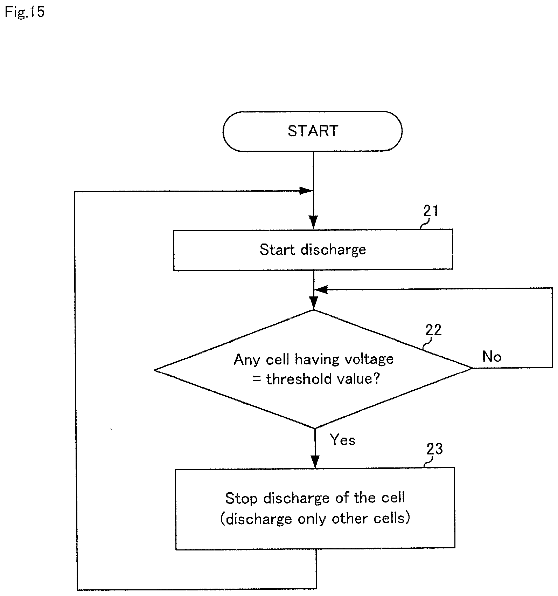

Figure 15 is a flowchart showing a method of discharge control in the exemplary embodiment shown in Figure 13.

First, in step 21, the two-cell operation (discharge) of cells 300-1 and 300-2 is started.

When discharge is started, measurement of the values of voltages across cells 300-1 and 300-2 by voltmeters 211-1 and 211-2 is started.

Thereafter, in step 22, control section 630 determines whether or not the voltage value of one of the cells measured by voltmeter 211-1 or 211-2 is equal to the threshold value stored in storage section 620.

This determination is made based on the result of comparing the voltage value measured by voltmeter 211-1 or 211-2 with the threshold value stored in storage section 620. This voltage value may be a value calculated by using the above-described open voltage method.

For example, in a case where a threshold value (2.4 V) such as shown in Figure 14 is stored in storage section 620, if the voltage value measured by voltmeter 211-1 is 2.4 V while the voltage value measured by voltmeter 211-2 is 2.5 V, control section 630 determines that the voltage value of cell 300-1 measured by voltmeter 211-1 is equal to the threshold value.

If control section 630 does not determine in step 22 that the voltage value of one of the cells is equal to the threshold value, that is, the remaining capacities of cells 300-1 and 300-2 are each larger than the threshold value, discharge of cells 300-1 and 300-2 is continued.

On the other hand, if control section 630 determines in step 22 that the voltage value of one of the cells is equal to the threshold value, it stops discharge of the cell whose voltage value is equal to the threshold value, and only discharge of the other cell is performed in step 23. Control section 630 performs this discharge control by using closing/opening of switches 400-1 and 400-2, as described above.

In the above-described example (the case where cell 300-1 is the cell whose voltage value became equal to the threshold value), control section 630 sets switch 400-1 in the open state. Cell 300-1 that is connected to switch 400-1 is not discharged thereafter. On the other hand, control section 630 maintains switch 400-2 in the closed (connected) state. Discharge of cell 300-2 that is connected to switch 400-2 is continued thereby.

Thereafter, the voltage value of cell 300-2 measured by voltmeter 211-2 also becomes equal to the threshold value stored in storage section 620. In that case, discharge of cell 300-2 is also stopped.

As described above, in the course of discharging a plurality of cells connected in parallel with each other, discharge of one of the cells whose remaining capacity becomes equal to a value on the border of the degradation region is stopped, thus enabling avoiding passage of the cell through the degradation region.

The method of calculating the remaining capacity of the cell is not limited to that described above. For example, a method using (full-charge capacity) - (current value) × (discharge time), as described above with reference to Figures 1 to 5, may alternatively be used.

Thus, when the remaining capacity of a cell approaches the degradation region, discharge of the cell is stopped. Passage through the degradation region can be avoided by stopping discharge of the cell. As a result, extension of the cell life can be achieved. This effect is particularly high when discharge control is performed on lithium-ion cells that have manganese-based positive poles in which a degradation region is noticeably recognized.

Easily understandable numeric values including capacities have been used in the above text or the drawings for ease of description. Not all of them are the same as the actual values.

Processing operations performed by the components provided in the above-described discharge controller 100 or 200 may be performed by logic circuits made according to the purpose. Also, a program in which details of the processing operations are described may be recorded on a recording medium readable in discharge controller 100 or 200, and the program recorded on this recording medium may be read by discharge controller 100 or 200 to be executed. "Recording medium readable in discharge controller 100 or 200" denotes a removable recording medium such as a floppy (trademark) disk, a magneto-optical disk, a DVD or a CD, or a memory such as a ROM or a RAM, an HDD or the like incorporated in discharge controller 100 or 200. The program recorded on this recording medium is read by a CPU (not shown in the drawings) provided in discharge controller 100 or 200 and processing operations similar to those described above are performed under the control of the CPU. The CPU operates as a computer to execute the program read from the recording medium on which the program is recorded.

The invention of the present application has been described by referring to the exemplary embodiments. However, the invention of the present application is not limited to the above-described exemplary embodiments. Various changes and modifications understandable by those skilled in the art can be made to the configuration and details of the invention of the present application within the scope of the claims of the present application.

This application is based upon and claims the benefit of priority from the prior Japanese Application No. 2010-287837 filed on December 24, 2010.

**Claims**

1.   A discharge controller for controlling discharge of a plurality of cells (300-1, 300-2) connected in parallel with each other and including a degradation region, the controller comprising:

a remaining capacity calculation section (110, 210) that calculates remaining capacities for each of the plurality of cells; and
a control section (130, 230, 630) that, after starting discharge of the plurality of cells, stops discharge of each of the cells whose remaining capacity calculated by said remaining capacity calculation section has become equal to a threshold value set in advance based on the upper limit of the degradation region,
wherein the degradation region is the region where cell degradation is promoted by passage of the cell through the degradation region.

2. The discharge controller according to Claim 1, wherein said remaining capacity calculation section (110, 210) measures currents flowing from the cells and the time from the start of discharge of the cells, and obtains, as the remaining capacities, values calculated by respectively subtracting the products of multiplication of the measured currents and time from the full-charge capacities of the cells.

3. The discharge controller according to Claim 1, wherein said remaining capacity calculation section (110, 210) measures voltages across the cells and obtains the measured voltages as the remaining capacities.

4. The discharge controller according to Claim 1, further comprising a storage section that stores the threshold value in advance,
wherein said control section (130, 230, 630) reads out the threshold value stored in said storage section and compares the threshold values with the remaining capacities.

5. The discharge controller according to Claim 1, wherein said control section (130, 230, 630) controls discharge and non-discharge of the plurality of cells by opening and closing a plurality of switches for establishing or breaking connections between the plurality of cells and an output terminal through which cells are externally discharged.

6. The discharge controller according to Claim 1, wherein said control section (130, 230, 630) performs rotation discharge, i.e. discharge performed by control section (130) alternately repeating opening and closing of switches (400-1, 400-2) of the plurality of cells (300-1, 300-2) if each of the remaining capacities of the plurality of cells is larger than the threshold value.

7. The discharge controller according to Claim 1, wherein the cells include a lithium-ion cell that has a manganese-based positive electrode.

8. A discharge control method for controlling discharge of a plurality of cells connected in parallel with each other and including a degradation region, the method comprising the steps of:

discharging the plurality of cells (300-1, 300-2);
calculating remaining capacities for each of the plurality of cells; and
stopping, after starting discharge of the plurality of cells, discharge of each of the plurality of cells whose remaining capacity calculated has become equal to a threshold value set in advance based on the upper limit of the degradation region,
wherein the degradation region is the region where cell degradation is promoted by passage of the cell through the degradation region.

9. The discharge control method according to Claim 8, wherein said calculation step includes measuring currents flowing from the cells and the time from the start of discharge of the cells, and obtaining, as the remaining capacities, values calculated by respectively subtracting the products of multiplication of the measured currents and time from the full-charge capacities of the cells.

10. The discharge control method according to Claim 8, wherein said calculation step includes measuring voltages across the cells and obtaining the measured voltages as the remaining capacities.

11. The discharge control method according to Claim 8, further comprising the step of performing rotation discharge, i.e. discharge performed by control section (130) alternately repeating opening and closing of switches (400-1, 400-2) of the plurality of cells (300-1, 300-2) if each of the remaining capacities of the plurality of cells is larger than the threshold value.

12. A program for making a controller that controls discharge of a plurality of cells connected in parallel with each other execute the steps of a process according to any one of claims 8 to 11.

**Patentansprüche**

1. Entladesteuerungsvorrichtung zum Steuern der Entladung mehrerer Zellen (300-1, 300-2), die parallel zueinander geschaltet sind und einen Degradationsbereich umfassen, wobei die Steuerungsvorrichtung aufweist:

   einen Restkapazität-Berechnungsabschnitt (110, 210), der Restkapazitäten für jede der mehreren Zellen berechnet; und
   einen Steuerabschnitt (130, 230, 630), der nach dem Starten der Entladung der mehreren Zellen die Entladung jeder der Zellen, deren von dem Restkapazität-Berechnungsabschnitt berechnete Restkapazität gleich einem Schwellwert geworden ist, der im Voraus basierend auf der Obergrenze des Degradationsbereichs festgelegt wird, stoppt,
   wobei der Degradationsbereich der Bereich ist, in dem die Zellendegradation durch den Durchgang der Zelle durch den Degradationsbereich gefördert wird.

2. Entladesteuerungsvorrichtung nach Anspruch 1, wobei der Restkapazität-Berechnungsabschnitt (110, 210) Ströme, die aus den Zellen fließen, und die Zeit ab dem Start der Entladung der Zellen misst, und als die Restkapazitäten Werte gewinnt, die durch jeweiliges Subtrahieren der Multiplikationsprodukte der gemessenen Ströme und der Zeit von den Vollladekapazitäten berechnet werden.

3. Entladesteuerungsvorrichtung nach Anspruch 1, wobei der Restkapazität-Berechnungsabschnitt (110, 210) Spannungen an den Zellen misst und die gemessenen Spannungen als die Restkapazitäten gewinnt.

4. Entladesteuerungsvorrichtung nach Anspruch 1, die ferner einen Speicherabschnitt, der den Schwellwert im Voraus speichert, aufweist,
   wobei der Steuerabschnitt (130, 230, 630) den in dem Speicherabschnitt gespeicherten Schwellwert ausliest und die Schwellwerte mit den Restkapazitäten vergleicht.

5. Entladesteuerungsvorrichtung nach Anspruch 1, wobei der Steuerabschnitt (130, 230, 630) die Entladung und Nichtentladung der mehreren Zellen durch Öffnen und Schließen mehrerer Schalter zum Herstellen oder Unterbrechen von Verbindungen zwischen den mehreren Zellen und einem Ausgangsanschluss, durch den Zellen extern entladen werden, steuert.

6. Entladesteuerungsvorrichtung nach Anspruch 1, wobei der Steuerabschnitt (130, 230, 630) eine Rotationsentladung, d.h. eine Entladung, durchführt, die durch den Steuerabschnitt (130) durchgeführt wird, indem das Öffnen und Schließen von Schaltern (400-1, 400-2) der mehreren Zellen (300-1, 300-2) abwechselnd wiederholt wird, wenn jede der Restkapazität der mehreren Zellen größer als der Schwellwert ist.

7. Entladesteuerungsvorrichtung nach Anspruch 1, wobei die Zellen eine Lithiumionenzelle umfassen, die eine positive Elektrode auf Manganbasis hat.

8. Entladesteuerungsverfahren zum Steuern der Entladung mehrerer Zellen, die parallel zueinander geschaltet sind und einen Degradationsbereich umfassen, wobei das Verfahren die folgenden Schritte aufweist:

   Entladen der mehreren Zellen (300-1, 300-2);
   Berechnen von Restkapazitäten für jede der mehreren Zellen; und
   nach dem Starten der Entladung der mehreren Zellen Stoppen der Entladung jeder der Zellen, deren berechnete Restkapazität gleich einem Schwellwert geworden ist, der im Voraus basierend auf der Obergrenze des Degradationsbereichs festgelegt wird,
   wobei der Degradationsbereich der Bereich ist, in dem die Zellendegradation durch den Durchgang der Zelle durch den Degradationsbereich gefördert wird.

9. Entladesteuerungsverfahren nach Anspruch 8, wobei der Berechnungsschritt das Messen von Strömen, die aus den Zellen fließen, und der Zeit ab dem Start der Entladung der Zellen, und das Gewinnen von Werten, die durch jeweiliges Subtrahieren der Multiplikationsprodukte der gemessenen Ströme und der Zeit von den Vollladekapazitäten berechnet werden, als die Restkapazitäten umfasst.

10. Entladesteuerungsverfahren nach Anspruch 8, wobei der Berechnungsschritt das Messen von Spannungen an den Zellen und das Gewinnen der gemessenen Spannungen als die Restkapazitäten umfasst.

**11.** Entladesteuerungsverfahren nach Anspruch 8, das ferner den Schritt des Durchführens einer Rotationsentladung, d.h. einer Entladung, aufweist, die durch den Steuerabschnitt (130) durchgeführt wird, indem das Öffnen und Schließen von Schaltern (400-1, 400-2) der mehreren Zellen (300-1, 300-2) abwechselnd wiederholt wird, wenn jede der Restkapazität der mehreren Zellen größer als der Schwellwert ist.

**12.** Programm, das eine Steuerungsvorrichtung, welche die Entladung mehrerer Zellen steuert, die parallel zueinander geschaltet sind, dazu bringt, die Schritte eines Verfahrens nach einem der Ansprüche 8 bis 11 auszuführen.

**Revendications**

**1.** Dispositif de commande de décharge pour commander la décharge d'une pluralité de batteries (300-1, 300-2) connectés en parallèle les uns avec les autres et comportant une région de dégradation, le dispositif de commande comprenant :

une section de calcul de capacité restante (110, 210) qui calcule des capacités restantes pour chacun de la pluralité de batteries ; et
une section de commande (130, 230, 630) qui, après le début de la décharge de la pluralité de batteries, arrête la décharge de chacune des batteries dont la capacité restante calculée par ladite section de calcul de capacité restante est devenue égale à une valeur seuil définie à l'avance sur la base de la limite supérieure de la région de dégradation,
dans lequel la région de dégradation est la région où une dégradation de batterie est favorisée par le passage de la batterie à travers la région de dégradation.

**2.** Dispositif de commande de décharge selon la revendication 1, dans lequel ladite section de calcul de capacité restante (110, 210) mesure des courants circulant à partir des batteries et le temps écoulé depuis le début de la décharge des batteries, et obtient, en tant que capacités restantes, des valeurs calculées par la soustraction respective des produits de multiplication des courants et du temps mesurés à partir des capacités de charge complète des batteries.

**3.** Dispositif de commande de décharge selon la revendication 1, dans lequel ladite section de calcul de capacité restante (110, 210) mesure des tensions aux bornes des batteries et obtient les tensions mesurées en tant que capacités restantes.

**4.** Dispositif de commande de décharge selon la revendication 1, comprenant en outre une section de stockage qui stocke la valeur seuil à l'avance,
dans lequel ladite section de commande (130, 230, 630) lit la valeur seuil stockée dans ladite section de stockage et compare les valeurs seuil avec les capacités restantes.

**5.** Dispositif de commande de décharge selon la revendication 1, dans lequel ladite section de commande (130, 230, 630) commande la décharge et la non-décharge de la pluralité de batteries par l'ouverture et la fermeture d'une pluralité de commutateurs pour établir ou interrompre des connexions entre la pluralité de batteries et une borne de sortie au travers de laquelle les batteries sont déchargées vers l'extérieur.

**6.** Dispositif de commande de décharge selon la revendication 1, dans lequel ladite section de commande (130, 230, 630) réalise une décharge en rotation, c'est-à-dire une décharge réalisée par la section de commande (130) répétant de manière alternée l'ouverture et la fermeture de commutateurs (400-1, 400-2) de la pluralité de batteries (300-1, 300-2) si chacune des capacités restantes de la pluralité de batteries est supérieure à la valeur seuil.

**7.** Dispositif de commande de décharge selon la revendication 1, dans lequel les batteries comportent une batterie au lithium-ion qui possède une électrode positive à base de manganèse.

**8.** Procédé de commande de décharge pour commander la décharge d'une pluralité de batteries connectée en parallèle les unes avec les autres et comportant une région de dégradation, le procédé comprenant les étapes de :

décharge de la pluralité de batteries (300-1, 300-2) ;
calcul de capacités restantes pour chacun de la pluralité de batteries ; et
arrêt, après le début de la décharge de la pluralité de batteries, de la décharge de chacun de la pluralité de batteries dont la capacité restante calculée est devenue égale à une valeur seuil définie à l'avance sur la base de la limite supérieure de la région de dégradation,

dans lequel la région de dégradation est la région où une dégradation de batterie est favorisée par le passage de la batterie à travers la région de dégradation.

9. Procédé de commande de décharge selon la revendication 8, dans lequel ladite étape de calcul comporte la mesure de courants circulant à partir des batteries et du temps écoulé depuis le début de la décharge des batteries, et l'obtention, en tant que capacités restantes, de valeurs calculées par la soustraction respective des produits de multiplication des courants et du temps mesurés à partir des capacités de charge complète des batteries.

10. Procédé de commande de décharge selon la revendication 8, dans lequel ladite étape de calcul comporte la mesure de tensions aux bornes des batteries et l'obtention des tensions mesurées en tant que capacités restantes.

11. Procédé de commande de décharge selon la revendication 8, comprenant en outre l'étape de réalisation d'une décharge en rotation, c'est-à-dire une décharge réalisée par la section de commande (130) répétant de manière alternée l'ouverture et la fermeture de commutateurs (400-1, 400-2) de la pluralité de batteries (300-1, 300-2) si chacune des capacités restantes de la pluralité de batteries est supérieure à la valeur seuil.

12. Programme pour amener un dispositif de commande, qui commande la décharge d'une pluralité de batteries connectées en parallèle les unes avec les autres, à exécuter les étapes d'un procédé selon l'une quelconque des revendications 8 à 11.

Fig.1

500 output terminal (positive)

OUT(+)

400-1 switch          400-2 switch

300-1 cell            300-2 cell

OUT(-)

501 output terminal (negative)

100 discharge controller

110
remaining capacity
calculation section

130
control section

120
storage
section

Fig.2

110 remaining capacity calculation
section

Fig.3

112 full-charge capacity hold section

| cell | full-charge capacity |
|------|---------------------|
| 300-1 | 10Ah |
| 300-2 | 9.6Ah |

Fig.4

120 storage section

| threshold value | capacity |
|---|---|
| upper limit | 6Ah |
| lower limit | 4Ah |

Fig.5

```
        ┌──────────────┐
        │    START     │
        └──────┬───────┘
               │
   ┌──────────>│
   │    ┌──────▼───────┐  1
   │    │ Start discharge │
   │    └──────┬───────┘
   │           │
   │      ┌────▼────┐
   │     ╱           ╲   2
   │    ╱ Any cell having ╲  No
   │    ╲ remaining        ╱────┐
   │     ╲ capacity =     ╱     │
   │      ╲first threshold╱      │
   │       ╲  value?    ╱        │
   │        ╲──┬──╱             │
   │       Yes │  <────────────┘
   │    ┌──────▼───────┐  3
   │    │Discharge only │
   │    │  the cell     │
   │    └──────┬───────┘
   │           │
   │      ┌────▼────┐
   │     ╱           ╲   4
   │    ╱  Remaining   ╲  No
   │    ╲ capacity =    ╱────┐
   │     ╲second thresh ╱    │
   │      ╲old value? ╱      │
   │        ╲──┬──╱  <───────┘
   │       Yes │
   └───────────┘
```

19

Fig.6

Fig.7

211-1     211-2

voltmeter          voltmeter

230 control
section

210 remaining capacity calculation section

EP 2 658 076 B1

Fig.8

22

Fig.9

220 storage section

| threshold value | capacity |
|---|---|
| upper limit | 2.4V |
| lower limit | 1.6V |

Fig.10

```
                        ┌─────────────────┐
                        │      START       │
                        └────────┬────────┘
                                 │
   ┌───────────────────────────►│
   │                             │              11
   │                    ┌────────▼─────────┐  ⌇
   │                    │  Start discharge  │
   │                    └────────┬─────────┘
   │                             │
   │                             ▼◄──────────────────┐
   │                        ╱─────────╲       12      │
   │                      ╱             ╲    ⌇         │
   │                    ╱  Any cell having ╲    No     │
   │                    ╲  voltage         ╱───────────┘
   │                      ╲ = first threshold value?
   │                        ╲───────╱
   │                             │ Yes
   │                             │            13
   │                    ┌────────▼─────────┐ ⌇
   │                    │ Discharge only the cell │
   │                    └────────┬─────────┘
   │                             │
   │                             ▼◄──────────────────┐
   │                        ╱─────────╲       14      │
   │                      ╱             ╲    ⌇         │
   │                    ╱                 ╲    No      │
   │                    ╲ Voltage = second ╱──────────┘
   │                      ╲ threshold value?
   │                        ╲───────╱
   │                             │ Yes
   └─────────────────────────────┘
```

Fig.11

Fig.12

Fig.13

500 output terminal (positive)

OUT(+)

400-1 switch          400-2 switch

300-1 cell          300-2 cell

OUT(-)

501 output terminal (negative)

600 discharge controller

210          630

remaining capacity
calculation section          control section

620

storage
section

Fig.14

620 storage section

| threshold value (capacity) |
| --- |
| 2.4V |

Fig.15

```
                    ┌──────────────────┐
                    │      START       │
                    └──────────────────┘
                             │
                             │           21
                             ▼      ┌─────────────┐
        ┌─────────────────────────────────┐
        │          Start discharge         │
        └─────────────────────────────────┘
                             │
                             ▼
                          ◇ 22
              Any cell having voltage          No
              = threshold value?
                             │
                           Yes        23
                             ▼
        ┌─────────────────────────────────┐
        │     Stop discharge of the cell   │
        │   (discharge only other cells)   │
        └─────────────────────────────────┘
```

**EP 2 658 076 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009033936 A
- JP 2008226511 A
- JP 2010287837 A